# EUROPÄISCHE PATENTSCHRIFT

(11) **EP 0 879 805 B1**
(45) Veröffentlichungstag und Bekanntmachung des Hinweises auf die Patenterteilung: **13.02.2002**
(21) Anmeldenummer: 97119928.6
(22) Anmeldetag: 13.11.1997
(51) Int. Cl.: C04B 28/06, C04B 41/71, C04B 41/52

(54) **Trockenmasse für hochelastische, emissionsarme Beschichtungen und Beschichtungsverfahren unter Verwendung dieser Masse.**
Dry mass for highly elastic, low-emission coatings and coating method by using this mass.
Matière sèche pour des couches élastiques à faibles emissions et procédé decouchage en utilisant cette matière.

(30) Priorität: 20.05.1997 DE 19721060
(43) Veröffentlichungstag der Anmeldung: 25.11.1998
(73) Patentinhaber: Wulff GmbH U. Co., 49504 Lotte (DE)
(72) Erfinder: Dieckmann, Ernst, 49088 Osnabrück (DE); Schliffke, Horst-Friedrich, 48565 Steinfurt-Burgsteinfurt (DE); Hummelt, Ralf, 48325 Ostbevern (DE)
(74) Vertreter: König, Beate, Dipl.-Phys. Dr.

(56) Entgegenhaltungen:
- DE-A- 19 620 176
- DE-A- 19 711 473
- GB-A- 635 485
- GB-A- 946 960

## Beschreibung

Die Erfindung betrifft eine Trockenmasse für eine hochelastische, emissionsarme Teppichrücken, Linoleumrücken- und Kunststoffbodenrückseiten-Beschichtung sowie für einen hochelastischen zementären, emissionsarmen Einbettungs- und Spachtelmörtel zum Verkleben mit einem beschichteten Teppich-, Linoleumoder Kunststoffboden und zum Einbinden eines unbeschichteten Teppich-, Linoleum- oder Kunststoffbodens sowie ferner die Verwendung der Trockenmasse und ein Verfahren zum Verlegen von Teppichen, Teppichböden, Linoleum und Kunststoffböden.

Teppichböden werden, wie alle anderen Gehkomfortbeläge, auf geeigneten flucht-, lot- und normengerechten, meist gespachtelten, verlegereifen Wand- und Boden-Unterböden geklebt. Lieferbare Breiten von Teppichböden für die Wand-zu-Wand- bzw. Bodenzu-Decken-Verklebung liegen bei 200, 400, 460 und 500 cm. Ein Teppichboden besteht im wesentlichen aus drei Bestandteilen:
1. Polgrundgewebe (Träger, Rohteppichboden)
2. Latexierung
3. Rückenbeschichtung (Schaum- oder Zweitrücken).

Die Geruchs- und Emissionsempfindlichkeit (besonders ist dabei an allergische Reaktionen zu denken) der Nutzer von Teppichböden im Wohn-, Verwaltungs-, Schul-, Krankenhaus- und Hotelbereich sowie in Kulturzentren (Theater, Konzertsäle) ist sehr groß geworden. Laut der Studie Seifert "Indoor-Air-Quality" sollten maximale Emissionswerte nach 10 Tagen Lagerung von 300 µg je m³ bei verklebten Teppichböden erzielt und eingehalten werden (Prof.-Seifert-Studie).

In den bekannten Teppichrückenbeschichtungen auf SBR-Latex-Basis (Styrol-Butadien-Dispersion) müssen das Styrol und auch die vorhandenen Anteile an Lösungsmittel (wie Toluol) als toxisch angesehen werden. Die geforderten niedrigen Emissionswerte nach 10 Tagen Lagerung von maximal 300 µg je m³ Raumluft sind bei einem geklebten Bodenbelag bislang nicht einzuhalten gewesen. Selbst ein besonders emissionsarmer Teppichboden verursacht Emissionen im Bereich von 300 bis 500 µg je m³ Raumluft (bitumen-beschichtete Teppichböden mit ihrem hohen Krebsgefährdungspotential erheblich mehr: 1000 bis 2000 µg/m³). Hinzu muß noch die Emission aus den Klebstoffen gerechnet werden. Diese liegt in der Regel (auch schon bei schwach emittierenden Produkten) bei 1000 µg je m³ (Startwert) und 300 µg (Messung am 10. Tag), vgl. Handbuch der Verlegepraxis für Teppichleger und Teppichverkäufer "Das Verlegen von Teppichböden", herausgegeben von der Teppichgemeinschaft Wuppertal 1963.

Zu dem Zweck, diese Nachteile zu mildern oder gar zu eliminieren, könnten im Prinzip zementäre Systeme eingesetzt werden. Nachteilig bei der Verwendung zementärer Systeme war jedoch bisher deren mangelhafte Elastizität, so daß sie bisher nicht zum Einsatz gelangten. Denn die bisher bekannten starr aushärtenden zementären Systeme würden bei Rollenbahnenware zerstört werden (reißen, brüchig werden). Der Trend, bei zementgebundenen Systemen in immer größerem Umfang Pulver-Produkte für Spachtel-, Ausgleichs-, Reparatur- und Estricharbeiten einzusetzen, ist andererseits durch die offenkundigen Vorteile dieser Systeme ungebrochen und im Zuge der Emissionsempfindlichkeit der Menschen gerade für die Teppich- und Linoleumhersteller bzw. zur Rohteppichverlegung an sich sehr ausnutzungswürdig:
1. niedrigste Emissionsrate < 50 µg/m³ Raumluft, gemessen am 10. Tag;
2. absolute Lösemittelfreiheit;
3. Entbehrlichmachung von Konservierungsmitteln, da Trockenprodukte kein Nährboden für Mikroben sind;
4. Möglichkeit des leichten Anmischens der Pulver (nur mit Leitungswasser bzw. emissionsarmer wäßriger Kunststoff-Dispersion) ;
5. unproblematische, preisgünstige Gebindeentsorgung (Papier);
6. Frostunempfindlichkeit bei der Lagerung;
7. preisgünstige Verpackungsmöglichkeit;
8. Transportkosteneinsparung, da kein Dispergierwasser transportiert wird;
9. Silotransport zu jeder Jahreszeit möglich;
10. keine Produktentsorgung, da nach vorkalkuliertem Verbrauch am Bau angesetzt werden kann; daher Abfallvermeidung.

Kunststoffbeläge, wie PO-Beläge (Polyolefinbeläge), gelten als schwer bis nicht verklebbar. Dieses liegt daran, daß die bislang aufgebrachten Haftprimer, vorzugsweise auf Basis von Vinylacetat-Dispersion rezeptiert, aufgrund der wegen der glatten Oberfläche auch der Rückseite bei Kunststoffbelägen möglichen und auch üblichen geringen Auftragsstärke keine ausreichende Feuchtigkeitssperre darstellen. PO-Beläge quellen unter Einwirkung von Feuchtigkeit aus den eingesetzten Dispersions-Klebstoffen. Folgeerscheinungen sind Blasen und Beulen im Belag.

Der Erfindung lag daher die Aufgabe zugrunde,
a) einen emissionsarmen, hochelastischen, zementären Boden- und Wandspachtel-Untergrund mit einer maximalen Emissionsrate von 50 µg/m³ (Messung am 10. Tag) und zugleich
b) eine emissionsarme, hochdauerelastische, geruchsneutrale, zementäre Teppichrücken-, Linoleumrücken- und Kunststoffbodenrückseiten-Beschichtung mit einer Emissionsrate von maximal 50 µg/m³ am 10. Tag als Einbettungsmörtel zur Gewährleistung der notwendigen Noppeneinbindung des Rohteppichbodens zu schaffen, wobei die Beschichtung b) in ihrer Zusammensetzung vorzugsweise mit dem unter a) angegebenen Spachtelmassenuntergrund für die Verklebung eines unbeschichteten oder werksseitig beschichteten Teppich-, Linoleum- der Kunststoffbodens (z.B. Polyolefin) an Wand- und Bodenflächen identisch ist.

Sowohl Spachteluntergrund als auch Beschichtung sollten sich ferner mittels emissionsarmer Dispersions-Klebstoffe gemäß der deutschen Patentanmeldung 196 20 176.4 mit einer Emissionsrate von unter 300 µg/m³, gemessen am 10. Tag, verkleben lassen, um die genannten Geruchsmängel und gesundheitlichen Nachteile auch bei Verwendung eines Klebers insgesamt zu beheben und verlegesicher auszuschalten. Derartige Klebstoffe sind wäßrige Kunstharzdispersionen mit einem Wassergehalt von nicht mehr als 15% mit einem Gehalt an einem Klebrigmacher auf Basis natürlicher Harzester und bzw. oder von Kunstharzen und mit einem Gehalt von 1 bis 5%, bezogen auf das Gewicht der Kunstharzdispersion, an einem Emulgator auf Basis von sulfatierten und bzw. oder sulfonierten Hydroxyoctadecensäuren und bzw. oder deren hochmolekularen Triglyceriden, wobei der Klebrigmacher bis zu einem pH-Wert von 4 bis 10 neutralisiert ist.

Die Lösung der oben angegebenen Aufgabe wird mit der in Anspruch 1 angegebenen Trockenmasse sowie durch das in den Ansprüchen 6 und 8 angegebene Verfahren erzielt. Vorteilhafte Ausführungsvarianten sind Gegenstand der abhängigen Ansprüche.

Das besonders umweltfreundliche und emissionsarme System der unten näher beschriebenen Zusammensetzung bewirkt u.a. bei Kunststoffbelägen, daß der Belag rückseitig gegen eindringende Feuchtigkeit aus dem Klebstoff abgesperrt wird. Gleichzeitig bewirkt die neuartige Beschichtung einen Haftprimer-Effekt, wodurch die Klebbarkeit eines PO-Belages erheblich verbessert wird. Damit wird ein Weg aufgezeigt und konsequent beschritten, den bislang schwer verklebbaren PO-Belag sicher zu verkleben, womit eine umweltfreundliche Alternative zum Polyvinylchlorid-Belag (PVC-Belag) möglich geworden ist.

Die erfindungsgmäße Trockenmasse zur Herstellung eines emissionsarmen Beschichtungs-, Einbettungs- und Spachtelmörtels besteht somit aus einem an sich bekannten Mörtel auf Basis von weißem oder naturfarbenem Portlandzement, weißem oder naturfarbenem Tonerdeschmelzzement und Calciumsulfat (Mörtelgruppe K), der zur Bildung einer ettringithaltigen Phase geeignet ist, sowie neben Streckmitteln und üblichen Zusatzstoffen, wie Tensiden, Entschäumern und bzw. oder Muskovit, aus 25 bis 30% eines redispergierbaren Kunststoff-Dispersionspulvers, 0,15 bis 1%, 2,3,4,5-Tetrahydroxyadipinsäure als Verflüssiger und 0,1 bis 1% 2,5-Furandicarbonsäure als Hydrophobierungsmittel, jeweils bezogen auf das Gesamtgewicht der Trockenmasse.

Bei einem vorteilhaften Ausführungsbeispiel der Erfindung ist als Verflüssiger 2,3,4,5-Tetrahydroxyadipinsäure vorhanden, die bis zu 50 Gew.-% durch Citronensäure, Weinsäure, Gluconsäure, Äpfelsäure und/oder Milchsäure und/oder Alkalisalze ersetzt.

Es kann als redispergierbares Dispersionspulver ein solches auf der Basis Copolymere aus Vinylacetat/höhere Vinyleester/Ethylen, Copolymere aus Acrylsäureester/Styrol/Acrylnitril und/oder Copolymere aus Vinylacetat/Ethen/Acrylsäureestern vorhanden sein.

Vorzugsweise ist die Trockenmasse gemäß der Erfindung mit dem 2,5- bis 3,5-fachen ihres Gewichts an einem ferromagnetischen Material vermischt.

Das erfindungsgemäße Verfahren zum Verlegen von Teppichen, insbesondere Teppichböden sowie von Linoleum- und Kunststoffböden, in Form von Rollenware oder Fliesen auf Untergründe unter Verwendung einer ein festes Anhaften des Teppichs auf dem Untergrund bewirkenden elastischen Schicht umfaßt, daß man eine mit Wasser anmachbare pulverige Trockenmasse, die aus einem an sich bekannten Mörtel auf Basis von weißem oder naturfarbenem Portlandzement, weißem oder naturfarbenem Tonerdeschmelzzement und Calciumsulfat (Mörtelgruppe K), der zur Bildung einer ettringithaltigen Phase geeignet ist, sowie neben Streckmitteln und üblichen Zusatzstoffen, wie Tensiden, Entschäumern und bzw. oder Muskovit, aus 25 bis 30% eines redispergierbaren Kunststoff-Dispersionspulvers, 0,15 bis 1%, 2,3,4,5-Tetrahydroxyadipinsäure als Verflüssiger und 0,1 bis 1%, 2,5-Furandicarbonsäure als Hydrophobierungsmittel, jeweils bezogen auf das Gesamtgewicht der Trockenmasse, besteht, mit Wasser anmacht, die mit Wasser angemachte Masse als elastische Schicht auf die dem Untergrund zugewandte Fläche der Teppiche, des Linoleums und der Kunststoffbeläge und bzw. oder auf den Untergrund aufbringt und entweder a) die dem Untergrund zugewandte, jedoch unbeschichtete Fläche des Teppichs auf den noch feuchten, beschichteten Untergrund aufbringt oder b) die dem Untergrund zugewandte, jedoch beschichtete Fläche des Teppichs entweder in getrocknetem oder in noch feuchtem Zustand auf den noch feuchten, beschichteten Untergrund aufbringt oder, c) wenn sowohl die dem Untergrund zugewandte, beschichtete Fläche des Teppichs, Linoleums oder Kunststoffbodens (z.B. Polyolefinbelages) als auch die Beschichtung des Untergrundes angetrocknet sind, auf den beschichteten Untergrund einen wässrigen Dispersionsklebstoff auf Basis natürlicher Harzester und bzw. oder Kunstharz als Klebrigmacher mit einem Wassergehalt von nicht mehr als 15% und mit einer Emulgatorgrundlage auf Basis von sulfatierten und bzw. oder sulfonierten Hydroxyoctadecensäuren und bzw. oder deren hochmolekularen Triglyceriden in einer Menge von 1 bis 5 Gew.-%, bezogen auf den Dispersionsklebstoff, wobei der Klebrigmacher zumindest teilweise auf einen pH-Wert von 4 bis 10 eingestellt ist, aufbringt und den noch feuchten Dispersionsklebstoff mit der beschichteten und getrockneten Rückseite in Berührung bringt.

Bei einer Durchführungsform des erfindungsgemäßen Verfahrens wird die gebrauchsfertige dauerelastische Masse, die aus der Trockenmasse gemäß der Erfindung durch Anmachen mit Wasser hergestellt wurde, werksseitig auf einer Beschichtungsanlage zur Verbesserung der Flächenstabilität, Erhöhung der Lebensdauer und Verbesserung des Gehkomforts eines Teppichbodens oder eines Linoleum- oder Kunststoffbodens aufgerakelt. Nach Austrocknung dieser Rückenbeschichtung kann der Teppichboden mit dem gleichen dauerelastischen Beschichtungsmörtel, wie er für die Teppichrückenbeschichtung verwendet wird, auf jeden verlegegeeigneten Unterboden verklebt werden.

Falls gewünscht, wird in den frischen, zementären Beschichtungsmörtel ein Abdeckvlies oder ein Glasfaser-, Polyester- oder Polyethylen-Gewebe unter Druck aufgebracht. Danach durchläuft das Produkt vorzugsweise einen Trockenkanal bei vorteilhafterweise +70°C. Das Abdeckvlies bzw. Glasfaser-, Polyester- oder Polyethylen-Gewebe dient dabei der zusätzlichen inneren Stabilisierung der Teppichrückenbeschichtung, um eventuell beim Trocknen auftretende Spannungen zu eliminieren. Alternativ kann das Produkt 24 Stunden an der Luft trocknen gelassen werden, um Energie zu sparen.

Gemäß einer weiteren Ausgestaltung der Erfindung kann bei Teppichböden auf die getrennten Arbeitsgänge
Bodenspachtel
+ Rückenbeschichtung des Teppichs
+ anschließende Verklebung
verzichtet werden. Der Rohteppichboden kann nämlich auch in einem einzigen Arbeitsgang, d.h. ohne Vorbehandlung des rohgetufteten Materials (Vorstrich) und ohne anschließende Rückenbeschichtung (Latexierung) für die Verfestigung des Flormaterials im Gewebeträger, sachgerecht verklebt werden. Dies wird dadurch bewirkt, daß der mit Wasser angemachte Trockenmörtel gemäß der Erfindung auf dem verlegegeeigneten Untergrund aufgetragen und das Teppichrohgewebe in das frische Mörtelbett eingelegt, angedrückt und angerieben wird. Die Verfestigung des Flormaterials im Gewebeträger (Teppichgrund) erfolgt einfach mit dem angemachten Trockenmörtel gemäß der Erfindung und ergibt die gewünschte Teppich-Dimensionsstabilität und Anhebung des Gehkomforts.

Die Masse gemäß der Erfindung läßt sich also in mit Wasser oder mit anflüchtigen organischen Verbindungen ("volatile organic compounds"-VOC) armer Kunststoffdispersion angemachtem Zustand in üblicher Weise zum Beschichten von Teppich- oder Linoleumrücken oder von Kunststoffbodenrückseiten, ferner zum Ausgleich von Unebenheiten des Untergrundes sowie zum Verkleben des Teppichrückens mit dem Untergrund verwenden. Sie läßt sich aber auch für alle diese drei Funktionen zugleich einsetzen.

Grundlage für die Wirkungsweise der Beschichtungs- oder Spachtelmasse bzw. des Einbettungsmörtels gemäß der Erfindung ist die bekannte Ettringitbildung durch die mineralische Mörtelgruppe, die aus Portlandzement, Tonerdeschmelzzement und Calciumsulfat, und zwar sowohl aus weißen als auch naturfarbenen (Grautöne) Rohstoffen besteht (Mörtelgruppe A). Dieser Grundmasse werden gleichfalls bekannte Additive, wie Muskovit, Tenside oder Entschäumer, und Extender (Streckmittel, Füllstoffe), wie Sand und/oder Carbonate, zugesetzt. Als Additiv wird Muskovit bevorzugt. Vorzugsweise sind die Vertreter der mineralischen Mörtelgruppe A zu 45 bis 55%, der Muskovit zu 10 bis 15%, die Extender ebenfalls zu 10 bis 15% und die Tenside und Entschäumer zu 0,2 bis 0,5% vorhanden. Die Prozentangaben beziehen sich jeweils auf das Gesamtgewicht der fertigen Trockenmasse.

Die erfindungsgemäß in einer Menge von 0,15 bis 1%, bezogen auf das Gesamtgewicht der Trockenmasse, als Verflüssiger einzusetzende 2,3,4,5-Tetrahydroxyadipinsäure kann bis zu 50% durch andere Verflüssiger auf Basis von Hydroxycarbonsäuren und/oder deren Alkalisalzen, wie Äpfelsäure, Citronensäure, Citrate, Gluconsäure, Gluconate, Milchsäure und/oder Weinsäure und Tartrate, ersetzt sein.

In diese Trockenmasse (Trockenmörtel-Grundlage) werden erfindungsgemäß 25 bis 30%, bezogen auf das Gesamtgewicht der Trokkenmasse, eines hochdauerelastisch auftrocknenden, redispergierbaren Kunststoffpulvers, wie eines Copolymers aus Vinylacetat/höheren Vinylestern/Ethylen, eines Copolymerisats aus Acrylsäureestern/Styrol/Acrylnitril und/oder eines Copolymerisats aus Vinylacetat/Ethylen/Acrylsäureestern, eingebracht. Derartige Kunststoffpulver sind im Handel, beispielsweise unter den Bezeichnungen "Vinnapas" der Firma Wacker AG oder "Acronal" der Firma BASF AG, erhältlich.

Zur Erhöhung der Hydrophobie der Massen nach der Erfindung erfolgt ferner der Zusatz von 0,1 bis 1%, bezogen auf das Gesamtgewicht der Trockenmasse, 2,5-Furandicarbonsäure. Freie Ca-Ionen aus der Mörtelgrundlage werden auf diese Weise an die Carboxylgruppen gebunden, eine erhöhte Hydrophobie erreicht und eine Anlösung sowie ein Ablösen der austrocknenden Masse in der Spachtelmassenoberfläche im µm-Bereich beim Einsatz als Spachtelmasse durch Wassereinwirkung aus höher wasserbasierten, lösungsmittelfreien Dispersions-Klebstoffen sicher verhindert.

Die Vorteile der erfindungsgemäßen Trockenmasse für die genannten Einsatzbereiche, nämlich als dauerelastischer Spachteluntergrund, dauerelastische Teppichrücken-, Linoleumrücken- oder Kunststoffbodenrückseiten-Beschichtung und dauerelastischer Einbettungsmörtel (Kleber) für die Rohteppichverklebung sind:
1. ein-komponentiger, nur mit Wasser anzurührender Trockenmörtel, der hochdauerelastisch aushärtet;
2. Vermeidung von Geruchsbelästigungen und Emissionen (< 50 µg/m³ Raumluft (Messung am 10. Tag)), wobei in einem Untersuchungstest des Teppichforschungsinstituts nach vier Tagen mit dem Mörtel gemäß der Erfindung 9 µg/m³ Raumluft erreicht werden);
3. Verwendung und Verarbeitbarkeit leicht und optimal umwelt- und nutzungsfreundlich;
4. Vermeidung von kennzeichnungspflichtigen Rohstoffen sowie Konservierungsmitteln und Lösungsmitteln (sowohl Niedrigals auch Mittel- und Hochsieder);
5. Einsetzbarkeit für mehrere verschiedene Bereiche (als Beschichtung für Teppich- oder Linoleumrücken und für Kunststoffbodenrückseiten sowie zur Rohteppicheinbettung und zum Bodenausgleich) ;
6. umweltgerechtere Lagerung der Rohstoffe; bisher eingesetzte Styrol/Butadien/Latex-Rückenbeschichtungen sind in eine Wassergefährdungsklasse eingestuft; leichte Entsorgung angerührter Restmengen als ausgehärteter Bauschutt;
7. schnelle Aushärtung des angerührten Trockenmörtels nach wenigen Stunden zu stabilen Hydratphasen und damit frühzeitige Weiterbearbeitung nach der Teppichrückenbeschichtung bzw. Rohteppicheinbettung: nach einem Spachtelausgleich kann sofort die Bodenbelagsverklebung erfolgen;
8. ein einziger Trockenmörtel für die formstabile System-Teppichverlegung (Spachteluntergrund, Rückenbeschichtung und Teppichverklebung) ohne Quell- und Schwindverhalten;
9. als Beschichtung/Einbettungsmörtel für Teppich-, Linoleum- oder Kunststoffliesen geeignet; Teppichfliesen werden in der Regel bislang noch mit Bitumenbeschichtungen ausgestattet, wobei Bitumen aufgrund der hohen Emissionsraten in Innenräumen als Gefährdungspotential anzusehen ist.

Der Trockenmörtel nach der Erfindung haftet nach dem Anmachen ohne Primer sowohl auf flexibler Teppichrohware als auch auf statisch festen Untergründen, wie Rohbeton, Estrichen, besonders auch auf verformungswilligen Untergründen, wie Holz-, Fibersilikat-Ausbauplatten oder Mörtelputzen.

Gemäß einer weiteren Ausführungsform der Erfindung wird der Trockenmasse als weiterer Bestandteil ein ferromagnetisches Material in einer Menge vom 2,5- bis 3,5-fachen des Gewichts der Trockenmasse zugemischt.

Ferner kann das redispergierbare Kunststoff-Dispersionspulver in der Trockenmasse fortgelassen und zur Erzielung einer verfließenden, hochelastisch aushärtenden Spachtelmasse, die sich zum Aufbringen auf verformungswillige Untergründe eignet, statt des Anmachwassers eine hochflexible Kunststoffdispersion zum Anmachen verwendet werden. Erfindungsgemäß werden Dispersionen auf der Basis von n-Butylacetat/Styrol-Copolymerisaten, die einen Zusatz von veretherten Polysacchariden enthalten, und/oder Dispersionen auf der Basis carboxylgruppenhaltiger Butadien/Styrol-Copolymerisate und/oder Dispersionen eines Copolymers auf der Basis von Acrylsäureester unter Mitverwendung von Acrylnitril eingesetzt. Derartige Kunststoffdispersionen sind im Handel erhältlich (Firmen BASF oder Wacker-Chemie). Sie weisen sämtlich sehr geringe Gehalte an flüchtigen organischen Verbindungen (VOC) auf. Der VOC-Wert für die wäßrige Dispersion eines Copolymers auf der Basis von Acrylsäureester unter Mitverwendung von Acrylnitril beträgt beispielsweise nur 200 µg emittierte Substanzen pro m³ Raumluft, bestimmt am 10. Tag nach Aufbringen mit Hilfe des Kammerverfahrens. Die zum Anmachen verwendete Kunststoffdispersion wird zur Erzielung optimaler Resultate vorzugsweise im Verhältnis 1 : 2 bis 1 : 4 zur ggf. ferromagnetisches Material enthaltenden Pulvermischung eingesetzt, d.h. zu 100 Gew.-Teilen Trockenmasse werden 25 bis 50 Gew.-Teile Kunststoffdispersion zugesetzt. Es wird eine hohe Dauerflexibilität der ausgehärteten Spachtelmasse erzielt.

Der auf diese Weise hergestellte selbstverfließende, sedimentationsstabile Fertigmörtel eignet sich insbesondere für die Herstellung von Teppich- und Linoleumrücken-Beschichtungen anstelle von Bitumenbeschichtungen und von Kunststoffrückseiten-Beschichtungs- und -Haftprimern und führt zu folgenden zusätzlichen Vorteilen, wenn er ferromagnetisches Material enthält:
1. hohe Eigenschwere und, damit verbunden, geringste Formveränderung des lose auslegbaren, beschichteten Teppichbodens (geringstes Quell- und Schwindverhalten) ;
2. DIN-gerechte ableitfähige Belags-Rückenbeschichtung;

Als ferromagnetisches Material wird ferromagnetisches Eisenpulver, das bis zu 10 Gewichtsprozent Nickel und/oder Cobalt enthalten kann, und/oder kohlenstoffhaltiges Eisenpulver und/oder Magnetit, der Cobalt- und/oder Bariumoxid enthalten kann, eingesetzt.

Die ferromagnetisches Material enthaltende Trockenmörtel-Teppich- und Linoleum-Rückenbeschichtung ist leitfähig mit einem Ableitwiderstand von 10⁶ bis 10⁷ Ohm nach DIN 51 953. Fußböden müssen ausreichend elektrisch isoliert sein, um Unfälle durch Berührung mit elektrischen Stromquellen auszuschließen; andererseits soll durch einen geringen Widerstand gegen Erde die Gefahr unzulässig hoher elektrostatischer Aufladungen von Personen und Gegenständen vermieden werden. Nach DIN 51 953 ist ein Fußboden ausreichend leitfähig, wenn der Ableitwiderstand zwischen 10⁶ und 10⁸ Ohm beträgt. Nach den Richtlinien Nr. 4 der EG Chemie DK 614.841 sind Gegenstände aus leitfähigen Stoffen elektrostatisch geerdet, deren Ableitwiderstand gegen Erde nicht größer als 10⁶ Ohm ist. In Operationssälen darf der Ableitwiderstand nach vier Jahren Standzeit höchstens 10⁸ Ohm betragen. Die Trockenmörtel-Teppich- und Linoleum-Rückenbeschichtung erfüllt diese Bedingungen.

Die Verlegung der ferromagnetisches Material enthaltenden Beläge kann wie folgt vorgenommen werden:
a) selbstliegend mit geringster Formveränderung (< 0,1 %; bisher sind Werte von 0,4 die Regel),
b) Kleben des Belages mit einem herkömmlichen Haftkleber als Fixierung. Fixierte Beläge halten auf geeigneten Untergründen oder vorhandenen Nutzbelägen, so daß für Belagsrenovierungen der fixierte Belag vom Untergrund ganzflächig abgezogen werden kann, ohne daß der Untergrund beschädigt wird.
c) Auflegen auf Magnethaftstreifen. Durch den Zusatz ferromagnetischer Stoffe in dem Trockenbeschichtungsmörtel einerseits sowie magnetischer Stoffe in Magnethaftstreifen andererseits wird der Belag haftsicher angezogen.

Die folgenden Beispiele erläutern die Erfindung. Unter der Bezeichnung Calciumsulfat (CaSO₄) verschiedener Modifikationen werden verstanden: alpha-CaSO₄, beta-CaSO₄, alpha, beta-CaSO₄ - Autoklavengemisch, CaSO₄ · 2 H₂O und Gemische untereinander, wobei der Anteil CaSO₄ · 2 H₂O in einem Gemisch 20% nicht überschreiten sollte.

Bevorzugte Rezepturen für die Trockenmasse:

| A. | |
|---|---|
| 45 - 55 Gew.-% | Bindemittel-Mörtelgruppe K (PZ (weiß), TRZ (weiß), CaSO₄, verschiedener Modifikationen), |
| 30 - 25 Gew.-% | hochelastisch auftrocknende, zementalkalisch beständige, redispergierbare Dispersionspulver der Basis Copolymere aus Vinylacetat/höheren Vinylestern/Ethylen und/oder Copolymerisate aus Vinylacetat/Ethen/Acrylsäureestern |
| 10 - 15 Gew.-% | Extender (weiß) |
| 15 - 10 Gew.-% | Muscovit (weiß) |
| 0,15 - 1 Gew.-% | 2,3,4,5-Tetrahydroxy-adipinsäure |
| 0,1 - 1 Gew.-% | 2,5 Furandicarbonsäure |
| 0,2 - 0,5 Gew.-% | Entschäumer, Tenside |

| B. | |
|---|---|
| 45 - 55 Gew.-% | Bindemittel-Mörtelgruppe K (PZ (naturrohfarben), TRZ (naturrohfarben), CaSO₄ verschiedener Modifikationen), |
| 30 - 25 Gew.-% | hochelastisch auftrocknende, zement-alkalisch beständige, redispergierbare Dispersionspulver der Basis Copolymere aus Vinylacetat/höheren Vinylestern/Ethylen und/oder Copolymerisate aus Vinylacetat/Ethen/Acrylsäureestern |
| 10 - 15 Gew.-% | Extender (naturrohfarben) |
| 15 - 10 Gew.-% | Muscovit (naturrohfarben) |
| 0,15 - 1 Gew.-% | 2,3,4,5-Tetrahydroxy-adipinsäure |
| 0,1 - 1 Gew.-% | 2,5 Furandicarbonsäure |
| 0,2 - 0,5 Gew.-% | Entschäumer, Tenside |

Die Farbe der Trockenmasse ist grau bis anthrazitfarben je nach den verwendeten naturrohfarbenen Bestandteilen.

| C. (ferromagnetisch) | |
|---|---|
| 100 Gew.-Teile | der Zusammensetzung A oder B (oben) |
| 250 bis 350 Gew.-Teile | ferromagnetisches Pulver (Graugußeisen pulver; Eisenpulver, das bis zu 10 Gew.-% Ni und/oder Co enthalten kann; Magnetitpulver, das Cobaltoxid und/oder Bariumoxid enthalten kann) |

### Beipiel 1

Ein Spachtelmassentrockenmörtel folgender Zusammensetzung wird durch Vermischen der Komponenten hergestellt:

| | |
|---|---|
| 65,1 Gew.-Teile | Bindemittel Mörtelgruppe K (PZ (weiß bzw. naturrohfarben), TRZ weiß, bzw. naturrohfarben), CaSO₄ |
| 25,0 Gew.-Teile | hochelastisch auftrocknende, zementalkalisch beständige, redispergierbare Dispersionspulver der Basis Copolymere aus Vinylacetat/höheren Vinylestern/Ethylen und/oder Copolymerisate aus Vinylacetat/Ethen/Acrylsäureestern |
| 20,0 Gew.-Teile | Extender (weiß bzw. naturrohfarben) |
| 13,3 Gew.-Teile | Muscovit (weiß bzw. naturrohfarben) |
| 0,7 Gew.-Teile | 2,3,4,5-Tetrahydroxy-adipinsäure |
| 0,7 Gew.-Teile | 2,5 Furandicarbonsäure |
| 0,3 Gew.-Teile | Entschäumer, Tenside |

### Beispiel 2

a) 100 kg des Spachtelmassen-Trockenmörtels gemäß Beispiel 1 werden mit 17 bis 18 l Leitungswasser zu einem pastös-flüssigen Mörtel angerührt und sofort auf den verlegegeeigneten Untergrund, z.B. Estrich, aufgetragen. Der Mörtel ist nach 24 Std. verlegereif ausgetrocknet (unter 3 Gew.-%, bestimmt nach der Calciumcarbid (CM)-Methode).
b) Der gleiche Mörtel nach a) wird auf einer Beschichtungsanlage als dauerelastische Teppichrückenbeschichtung aufgerakelt. Die ausgehärtete Teppichrückenbeschichtung wird auf den nach a) vorbereiteten verlegereifen Untergrund mit
c) dem emissionsarmen Dispersions-Klebstoff nach Patentanmeldung 196 20 176.4 verklebt.

### Beispiel 3

Auf die 3 Arbeitsgänge a) bis c) gemäß Beispiel 2 (Unterbodenspachtelung, Teppichrückenbeschichtung und anschließende Verklebung) wird verzichtet und stattdessen der Trockenmörtel gemäß der Erfindung (Beispiel 1) in einem einzigen Arbeitsgang auf den verlegegeeigneten Untergrund aufgetragen und das Teppichrohgewebe in den frischen Einbettmörtel gemäß der Erfindung eingelegt, angedrückt und angerieben.

### Beispiel 4

19 Gew.-Teile des Spachtelmassen-Trockenmörtels gemäß Beispiel 1, jedoch ohne einen Gehalt an redispergierbarem Dispersionspulver, werden mit 54 Gew.-Teilen ferromagnetischen Eisenpulvers und mit 27 Gew.-Teilen einer hochflexiblen Kunststoffdispersion mit Gesamt-VOC von 200 µg/m³ angerührt.
Der so erstellte Mörtel wird in einer Beschichtungsanlage mind. 2 mm stark auf die Teppich- und Linoleum-Belagsrückseite bzw. bei Polyolefinbelägen in einer Menge von 50 bis 300 g/m² auf die Belagsrückseite aufgerakelt. In den frischen Mörtel wird ein Polyester- oder Glasfasergewebe eingebettet. Der Beschichtungsmörtel ist an der Luft nach 24 Stunden ausgetrocknet oder wird in einem Trockenkanal beschleunigt getrocknet, so daß der beschichtete Belag verlegt werden kann.

## Patentansprüche

1. Trockenmasse zur Herstellung eines emissionsarmen Beschichtungs-, Einbettungs- und Spachtelmörtels, bestehend aus einem an sich bekannten Mörtel auf Basis von weißem oder naturfarbenem Portlandzement, weißem oder naturfarbenem Tonerdeschmelzzement und Calciumsulfat (Mörtelgruppe K), der zur Bildung einer ettringithaltigen Phase geeignet ist, sowie neben Streckmitteln und üblichen Zusatzstoffen, wie Tensiden, Entschäumern und bzw. oder Muskovit, aus 0,15 bis 1% 2,3,4,5-Tetrahydroxyadipinsäure als Verflüssiger und 0,1 bis 1% 2,5-Furandicarbonsäure als Hydrophobierungsmittel, jeweils bezogen auf das Gesamtgewicht der Trockenmasse.

2. Trockenmasse nach Anspruch 1, **dadurch gekennzeichnet, daß** als Verflüssiger 2,3,4,5-Tetrahydroxyadipinsäure vorhanden ist, die bis zu 50 Gew.-% durch Citronensäure, Weinsäure, Gluconsäure, Äpfelsäure und/oder Milchsäure und/oder deren Alkalisalze ersetzt ist.

3. Trockenmasse nach Anspruch 1 oder 2, **dadurch gekennzeichnet, daß** sie mit dem 2,5- bis 3,5-fachen ihres Gewichts an einem ferromagnetischen Material vermischt ist.

4. Trockenmasse nach einem der Ansprüche 1 bis 3, **dadurch gekennzeichnet, daß** sie zusätzlich 25 bis 30% eines redispergierbaren Kunststoff-Dispersionspulvers, bezogen auf das Gesamtgewicht der Trockenmasse, enthält.

5. Trockenmasse nach Anspruch 4, **dadurch gekennzeichnet, daß** als redispergierbares Dispersionspulver ein solches auf der Basis Copolymere aus Vinylacetat/höhere Vinylester/Ethylen, Copolymere aus Acrylsäureester/Styrol/Acrylnitril und/oder Copolymere aus Vinylacetat/Ethen/Acrylsäureestern vorhanden ist.

6. Verfahren zum Verlegen von Teppichen, Teppichböden, Linoleum und Kunststoffböden, insbesondere in Form von Rollenware oder als Fliesen, auf Untergründe unter Verwendung einer ein festes Anhaften des Teppichs auf dem Untergrund bewirkenden elastischen Schicht, **dadurch gekennzeichnet, daß** man eine Trockenmasse gemäß Anspruch 4 oder 5 mit Wasser anmacht, die mit Wasser angemachte Masse als elastische Schicht auf den Untergrund aufträgt und die dem Untergrund zugewandte, unbeschichtete Fläche des Teppichs auf den noch feuchten, beschichteten Untergrund aufbringt.

7. Verfahren nach Anspruch 6, **dadurch gekennzeichnet, daß** man die mit Wasser angemachte Trockenmasse gemäß Anspruch 4 oder 5 zusätzlich auf die dem Untergrund zugewandte Fläche der Teppiche, des Linoleums oder der Kunststoffböden aufträgt und entweder die dem Untergrund zugewandte, beschichtete Fläche des Teppichs in getrocknetem oder in noch feuchtem Zustand auf den noch feuchten, beschichteten Untergrund aufbringt oder, wenn sowohl die dem Untergrund zugewandte, beschichtete Fläche des Teppichs als auch die Beschichtung des Untergrundes angetrocknet ist, auf den beschichteten Untergrund einen wässrigen Dispersionsklebstoff auf Basis natürlicher Harzester und bzw. oder Kunstharz als Klebrigmacher mit einem Wassergehalt von nicht mehr als 15% und mit einem Gehalt an einem Emulgator auf Basis von sulfatierten und bzw. oder sulfonierten Hydroxyoctadecensäuren und bzw. oder deren hochmolekularen Triglyceriden in einer Menge von 1 bis 5 Gew.-%, bezogen auf den Dispersionsklebstoff, wobei der Klebrigmacher zumindest teilweise auf einen pH-Wert von 4 bis 10 eingestellt ist, aufbringt und den noch feuchten Dispersionsklebstoff mit der beschichteten und getrockneten Rückseite in Berührung bringt.

8. Verfahren zum Verlegen von Teppichen, Teppichböden, Linoleum und Kunststoffböden, insbesondere in Form von Rollenware oder als Fliesen, auf Untergründe unter Verwendung einer ein festes Anhaften des Teppichs auf dem Untergrund bewirkenden elastischen Schicht, **dadurch gekennzeichnet, daß** man eine Trockenmasse gemäß einem der Ansprüche 1 bis 3 mit einer hochflexiblen copolymeren Kunststoffdispersion in einer Menge von 25 bis 50 Gewichtsteilen je 100 Gewichtsteile Trockenmasse zu einem selbstverfließenden Mörtel anmacht, den Mörtel auf den Belagrücken aufbringt und trocknet und die beschichtete Teppich- bzw. Linoleumware bzw. den Kunststoffboden entweder
a) auf den Untergrund auflegt oder
b) mittels eines Haftklebstoffs mit dem Untergrund verklebt oder
c) im Falle eines Gehalts der Trockenmasse an ferromagnetischem Material auf über den Untergrund verlegte Magnethaftstreifen auflegt.

9. Verfahren nach Anspruch 6 oder 8, **dadurch gekennzeichnet, daß** man in den auf den Belagrücken aufgebrachten, frischen, zementären Beschichtungsmörtel ein Abdeckvlies oder ein Polyester- oder Polyethylen-Gewebe eindrückt und das Ganze trocknet.

10. Verwendung der Trockenmasse nach Anspruch 4 oder 5 in mit Wasser angemachtem Zustand zum Beschichten von Teppichrücken und/oder zum Ausgleich von Unebenheiten des Untergrundes und/oder zum Verkleben des Teppichrückens mit dem Untergrund.

11. Verwendung der Trockenmasse nach einem der Ansprüche 1 bis 3 in mit einer hochflexiblen copolymeren Kunststoffdispersion angemachtem Zustand zum Beschichten von Teppich- oder Linoleumrücken sowie von glatten Kunststoffbodenrückseiten.

## Claims

1. Dry mass for the purpose of producing a low-emission coating, embedding and surface mortar consisting of a mortar, which is known *per se*, based upon white or natural-coloured Portland cement, white or natural-coloured fused alumina cement and calcium sulphate (mortar group K) which is suitable for the purpose of forming an ettringite-containing phase, and in addition to extending agents and conventional additives, such as surfactants, defoaming agents and/or muscovite, of 0.15 to 1% of 2, 3, 4, 5-tetra hydroxy adipic acid as a liquefier and 0.1 to 1% of 2, 5-furan dicarboxylic acid as a hydrophobing agent, based in each case upon the total weight of the dry mass.

2. Dry mass according to claim 1, **characterised in that** the liquefier is provided in the form of 2, 3, 4, 5-tetra hydroxy adipic acid which is replaced up to 50 wt.% by citric acid, tartaric acid, gluconic acid, malic acid and/or lactic acid and/or alkali salts thereof.

3. Dry mass according to claim 1 or 2, **characterised in that** it is mixed with 2.5 to 3.5 times its weight of a ferromagnetic material.

4. Dry mass according to any one of the claims 1 to 3, **characterised in that** it additionally contains 25 to 30% of a re-dispersible synthetic material dispersion powder, based upon the total weight of the dry mass.

5. Dry mass according to claim 4, **characterised in that** the re-dispersible dispersion powder is provided in the form of this type of powder based upon copolymers of vinyl acetate/higher vinyl ester/ethylene, copolymers of acrylic acid ester/styrene/acrylonitrile and/or copolymers of vinyl acetate/ethene/acrylic acid esters.

6. Method of laying carpets, carpeting, linoleum and synthetic material floors, in particular in the form of rolled material or as tiles, on base floors using an elastic layer which serves to fixedly adhere the carpet to the base floor, **characterised in that** a dry mass in accordance with claim 4 or 5 is mixed with water, the mass which has been mixed with water is applied as an elastic layer to the base floor and the uncoated surface of the carpet facing the base floor is applied to the still moist, coated base floor.

7. Method according to claim 6, **characterised in that** the dry mass according to claim 4 or 5 which has been mixed with water is also applied to the surface, facing the base floor, of the carpet, the linoleum or the synthetic material floors and either the coated surface of the carpet facing the base floor is applied in a dry or still moist state to the still moist, coated base floor or, if both the coated surface of the carpet facing the base floor and also the coating of the base floor have started to dry, there is applied to the coated base floor an aqueous dispersion adhesive on the basis of natural resin esters and/or synthetic resin as a tackifying agent having a water content of not more than 15% and having a content of an emulsifier on the basis of sulfated and/or sulfonated hydroxy octadecenoic acids and/or their high-molecular triglycerides in a quantity of 1 to 5wt.%, based upon the dispersion adhesive, wherein the tackifying agent is adjusted at least partially to a pH-value of 4 to 10, and the still moist dispersion adhesive is brought into contact with the coated and dried rear side.

8. Method of laying carpets, carpeting, linoleum and synthetic material floors, in particular in the form of rolled material or as tiles, on to base floors using an elastic layer which serves to fixedly adhere the carpet to the base floor, **characterised in that** a dry mass in accordance with any one of claims 1 to 3 is mixed with a highly flexible copolymeric synthetic material dispersion in a quantity of 25 to 50 parts by weight per 100 parts by weight dry mass to form a self-flowing mortar, the mortar is applied on to the back of the floor covering and dries and the coated carpet or linoleum material or the synthetic material floor is either
a) laid on to the base floor or
b) adhered to the base floor by means of a contact adhesive or
c) laid on to magnetic adhesive strips placed over the base floor in the event of a content of ferromagnetic material in the dry mass.

9. Method according to claim 6 or 8. **characterised in that** a non-woven cover or a polyester or polyethylene woven fabric is pressed into the fresh, cementitious coating mortar which has been applied to the back of the floor covering.

10. Use of the dry mass according to claim 4 or 5 in a state mixed with water for coating backs of carpets and/or for compensating for any unevenness in the base floor and/or for adhering the carpet back to the base floor.

11. Use of the dry mass according to any one of the claims 1 to 3 in a state mixed with a highly flexible, copolymeric synthetic material dispersion for the purpose of coating the backs of carpets or linoleum and smooth rear sides of synthetic material floors.

## Revendications

1. Matière sèche servant à la préparation d'un mortier de revêtement, d'inclusion et d'enduction peu polluant, constituée d'un mortier connu en tant que tel à base de ciment Portland blanc ou de couleur naturelle, de ciment alumineux blanc ou de couleur naturelle et dé sulfate de calcium (mortier de type K) capable de former une phase ettringite, ainsi que de charges et d'additifs usuels tels que des agents tensioactifs, des agents anti-mousse et/ou de la muscovite, de 0,15 à 1 % d'acide 2,3,4,5-tétrahydroxyadipique, en tant qu'agent fluidifiant, et de 0,1 à 1 % d'acide 2,5-furanedicarboxylique en tant qu'agent hydrophobisant, toutes les quantités étant rapportées au poids total de la matière sèche.

2. Matière sèche selon la revendication 1, **caractérisée par le fait que** l'on utilise en tant qu'agent fluidifiant de l'acide 2,3,4,5-tétrahydroxyadipique, remplacé par jusqu'à 50 % en poids d'acide citrique, d'acide tartrique, d'acide gluconique, d'acide malique et/ou d'acide lactique et/ou de sels de métaux alcalins de ces acides.

3. Matière sèche selon la revendication 1 ou 2, **caractérisée par le fait qu'**elle est sous forme de mélange avec 2,5 à 3,5 fois son poids d'un matériau ferromagnétique.

4. Matière sèche selon l'une des revendications 1 à 3, **caractérisée par le fait qu'**elle contient en outre de 25 à 30 %, rapporté au poids total de la matière sèche, d'une poudre de matière plastique redispersible.

5. Matière sèche selon la revendication 4, **caractérisée par le fait que** l'on utilise en tant que poudre redispersible une poudre à base de copolymère acétate de vinyle/esters vinyliques supérieurs/éthylène, à base de copolymère esters d'acide acrylique/styrène/acrylonitrile et/ou à base de copolymère acétate de vinyle/éthène/esters d'acide acrylique.

6. Procédé de pose de tapis, de moquettes, de linoléums et de revêtements de sol en matières plastiques, se présentant en particulier sous forme de rouleaux ou de dalles, sur des sols, utilisant une couche élastique permettant de faire adhérer le tapis solidement au sol, **caractérisé par le fait que** l'on mélange une matière sèche selon la revendication 4 ou 5 avec de l'eau, que l'on applique le mélange eau/matièresèche en tant que couche élastique sur le sol et que l'on pose le tapis, avec sa face inférieure non enduite tournée vers le bas, sur le sol enduit encore humide.

7. Procédé selon la revendication 6, **caractérisé par le fait que** l'on applique le mélange eau/matière sèche également sur la face inférieure des tapis, linoléums ou revêtements de sol en matières plastiques, et que l'on pose le tapis, avec sa face inférieure enduite, sèche ou encore humide, tournée vers le bas, sur le sol enduit encore humide, ou, lorsque la face inférieure enduite du tapis et l'enduit recouvrant le sol ont commencé à sécher, que l'on applique sur le sol enduit un adhésif de dispersion à base d'eau et de résines naturelles et/ou synthétiques, en tant qu'agent poissant, contenant au plus 15 % d'eau et de 1 à 5 %, rapporté au poids total de l'adhésif de dispersion, d'un agent émulsionnant à base d'acides hydroxyoctadécènecarboxyliques sulfatés et/ou sulfonés ou de triglycérides de haut poids moléculaire de tels acides, au moins une partie de l'agent poissant ayant un pH compris entre 4 et 10, et que l'on met en contact l'adhésif de dispersion encore humide avec la face inférieure enduite séchée du matériau à poser.

8. Procédé de pose de tapis, de moquettes, de linoléum et de revêtements de sol en matières plastiques, se présentant en particulier sous forme de rouleaux ou de dalles, sur des sols, utilisant une couche élastique permettant de faire adhérer le tapis solidement au sol, **caractérisé par le fait que** l'on mélange une matière sèche selon l'une des revendications 1 à 3 avec 25 à 50 parties en poids, pour 100 parties en poids de matière sèche, d'une dispersion d'un copolymère hautement flexible, de manière à obtenir un mortier fluide, que l'on applique le mortier sur la face inférieure du matériau à poser, qu'on le sèche et
a) que l'on pose ensuite le tapis, le linoléum ou le revêtement de sol en matières plastiques sur le sol,
b) que l'on colle ces matériaux à poser sur le sol à l'aide d'un adhésif ou,
c) lorsque la matière sèche contient un matériau ferromagnétique, que l'on pose ces matériaux à poser sur des bandes magnétiques posées sur le sol.

9. Procédé selon la revendication 6 ou 8, **caractérisé par le fait que** l'on applique sur le mortier-ciment frais, appliqué sur la face inférieure du matériau à poser, un non-tissé ou un tissu en polyester ou polyéthylène, en l'y faisant pénétrer, et que l'on sèche l'ensemble.

10. Utilisation de la matière sèche selon la revendication 4 ou 5, sous forme de mélange avec de l'eau, pour l'enduction de faces inférieures de tapis et/ou pour le nivellement d'irrégularités du sol et/ou pour le collage de la face inférieure du tapis sur le sol.

11. Utilisation de la matière sèche selon la revendication 1 à 3, sous forme de mélange avec une dispersion d'un copolymère hautement flexible, pour l'enduction de la face inférieure de tapis ou de linoléums ainsi que de faces inférieures lisses de revêtements de sol en matières plastiques.
